# EUROPEAN PATENT APPLICATION

(11) **EP 1 983 773 A1**
(43) Date of publication of application: **22.10.2008**
(21) Application number: 07706511.8
(22) Date of filing: 10.01.2007
(51) Int. Cl.: H04Q 7/22, H04L 12/56

(54) **HANDOVER CONTROL METHOD**

(30) Priority: 17.01.2006 JP 2006009294
(71) Applicant: NTT DoCoMo, Inc., Chiyoda-ku Tokyo 100-6150 (JP)
(72) Inventor: MORIMOTO, Akihito, Tokyo 100-6150 (JP); HIGUCHI, Kenichi, Tokyo 100-6150 (JP); SAWAHASHI, Mamoru, Tokyo 100-6150 (JP)
(74) Representative: HOFFMANN EITLE
(86) International application number: PCT/JP2007/050164
(87) International publication number: WO 2007/083547

(57) **Abstract**

There is provided a handover control method in a mobile communication network wherein an IP packet is exchanged between an access router and a base station, comprising the steps of: receiving a handover request from a mobile station; discarding a packet presently retransmitted and a packet waiting to be scheduled; and switching between cells.

## Description

### TECHNICAL FIELD

The present invention relates to handover control methods for cases where a mobile station moves from a cell area of one base station to a cell area of another base station.

### BACKGROUND ART

Use of IP (Internet Protocol) has been expanded in mobile communication networks, so that radio packets are used in radio intervals. For small size IP packets, several such IP packets are bundled to be a radio packet, while for large size IP packets, such an IP packet is subdivided to be several radio packets.

In conventional HSDPA (High Speed Downlink Packet Access), a radio network controller (RNC) is arranged in an upper level of base stations, and mapping from IP packets to radio packets is carried out in the RNC. When movement of a mobile station results in a handover request being issued, a handover destination base station takes over retransmission of radio packets that have not been completely received, that is, radio packets whose reception acknowledgements have not been received, and transmission of radio packets that have not been transmitted.

The applicant has discovered no prior art document related to the present invention and publicly known before the filing date. Thus, the applicant does not disclose prior art document information.

### DISCLOSURE OF INVENTION

### [PROBLEM TO BE SOLVED BY THE INVENTION]

In order to make mobile communication network configurations simpler, for example, instead of sophisticated RNCs, access routers having only a feature of communicating IP packets to base stations tend to be used.

In this case, when a mobile station moves and accordingly a handover request is issued, the handover cannot be smoothly fulfilled in that no upper apparatus is provided for managing radio packets that have not been completely received or radio packets that still have not been transmitted.

The present invention is proposed to eliminate the above-mentioned conventional problem. One object of the present invention is to provide handover control methods achieving smooth handover in mobile communication networks where IP packets are exchanged between access routers and base stations.

### [MEANS FOR SOLVING THE PROBLEM]

In order to eliminate the above-mentioned problem, as recited in claim 1, the present invention relates to a handover control method in a mobile communication network wherein an IP packet is exchanged between an access router and a base station, comprising the steps of: receiving a handover request from a mobile station; discarding a packet presently retransmitted and a packet waiting to be scheduled; and switching between cells.

Furthermore, as recited in claim 2, the present invention relates to a handover control method in a mobile communication network wherein an IP packet is exchanged between an access router and a base station, comprising the steps of: receiving a handover request from a mobile station; discarding a packet waiting to be scheduled; waiting for completion of transmission of a packet presently retransmitted; and switching between cells.

Still further, as claimed in claim 3, the present invention relates to a handover control method in a mobile communication network wherein an IP packet is exchanged between an access router and a base station, comprising the steps of: receiving a handover request from a mobile station; waiting for completion of transmission of a packet presently retransmitted and a packet waiting to be scheduled; and switching between cells.

In addition, as claimed in claim 4, the handover control method as claimed in any of claims 1 to 3 may further comprise the step of: transmitting an index of a packet completely transmitted in a source cell from the source cell to a destination cell in wired transmission.

In addition, as claimed in claim 5, the handover control method as claimed in any of claims 1 to 3 may further comprise the step of: transmitting an index of a packet completely transmitted in a source cell from a mobile station to a destination cell in radio transmission.

Also, as claimed in claim 6, the present invention relates to a base station apparatus in a mobile communication network wherein an IP packet is exchanged between an access router and a base station, comprising: a reception unit receiving a handover request from a mobile station; a cell switch unit switching between cells, the cell switch unit discarding a packet presently retransmitted and a packet waiting to be scheduled, or discarding a packet waiting to be scheduled and waiting for completion of transmission of a packet presently retransmitted, or waiting for completion of transmission of a packet presently retransmitted and a packet waiting to be scheduled.

In addition, as claimed in claim 7, the base station apparatus as claimed in claim 6 may further comprise: a notification unit transmitting an index of a packet completely transmitted in a source cell from the source cell to a destination cell via wired transmission.

Also, as claimed in claim 8, the present invention relates to a mobile station apparatus in a mobile communication network wherein an IP packet is exchanged between an access router and a base station, comprising: a handover request unit issuing a handover request to a base station, the handover request unit discarding a packet presently retransmitted and a packet waiting to be scheduled, or discarding a packet waiting to be scheduled and waiting for completion of transmission of a packet presently retransmitted, or waiting for completion of transmission of a packet presently retransmitted and a packet waiting to be scheduled.

In addition, as claimed in claim 9, the mobile station apparatus as claimed in claim 8 may further comprise: a notification unit transmitting an index of a packet completely transmitted in a source cell from the source cell to a destination cell via radio transmission.

### [ADVANTAGE OF THE INVENTION]

According to the handover control methods of the present invention, smooth handover can be fulfilled in mobile communication networks where IP packets are transmitted from an access router to base stations.

### BRIEF DESCRIPTION OF DRAWINGS

FIG. 1 shows an exemplary first configuration of a mobile communication network according to one embodiment of the present invention;
FIG. 2 shows an exemplary second configuration of a mobile communication network according to one embodiment of the present invention;
FIG. 3 shows an exemplary arrangement of a base station;
FIG. 4 shows an exemplary arrangement of a mobile station;
FIG. 5 shows an exemplary operation of handover control according to a first embodiment of the present invention;
FIG. 6 shows exemplary signal flow among units within a base station in handover control;
FIG. 7 shows an exemplary operation of handover control according to the first embodiment;
FIG. 8 shows exemplary signal flow among units within a mobile station in handover control;
FIG. 9 shows an exemplary operation of handover control according to a second embodiment of the present invention;
FIG. 10 shows exemplary signal flow among units within a base station in handover control;
FIG. 11 shows an exemplary operation of the handover control according to the second embodiment;
FIG. 12 shows exemplary signal flow among units within a mobile station in handover control;
FIG. 13 shows an exemplary operation of handover control according to a third embodiment of the present invention;
FIG. 14 shows signal flow among units within a base station in handover control;
FIG. 15 shows an exemplary operation of handover control according to the third embodiment;
FIG. 16 shows exemplary signal flow among units within a mobile station in handover control;
FIG. 17 shows an exemplary Index notification to a new cell according to a fourth embodiment of the present invention; and
FIG. 18 shows an exemplary Index notification to a new cell according to a fifth embodiment of the present invention.

### LIST OF REFERENCE SYMBOLS

1: access router
2A, 2B: wired transmission path
3A, 3B: base station
31: IP packet mapping unit
32: scheduling control unit
33: retransmission control unit
34: handover request reception unit
35: cell switch control unit
36: packet index transmission unit
37: radio packet demodulation unit
38: IP packet demapping unit
301: scheduling buffer
302: retransmission buffer
4A, 4B: radio transmission path
5: mobile station
51: radio packet demodulation unit
52: IP packet demapping unit
53: handover request determination unit
54: packet index transmission unit
55: IP packet mapping unit
56: scheduling control unit
57: retransmission control unit
501: scheduling buffer
502: retransmission buffer

### BEST MODE FOR CARRYING OUT THE INVENTION

Preferred embodiments of the present invention will be described hereinafter.

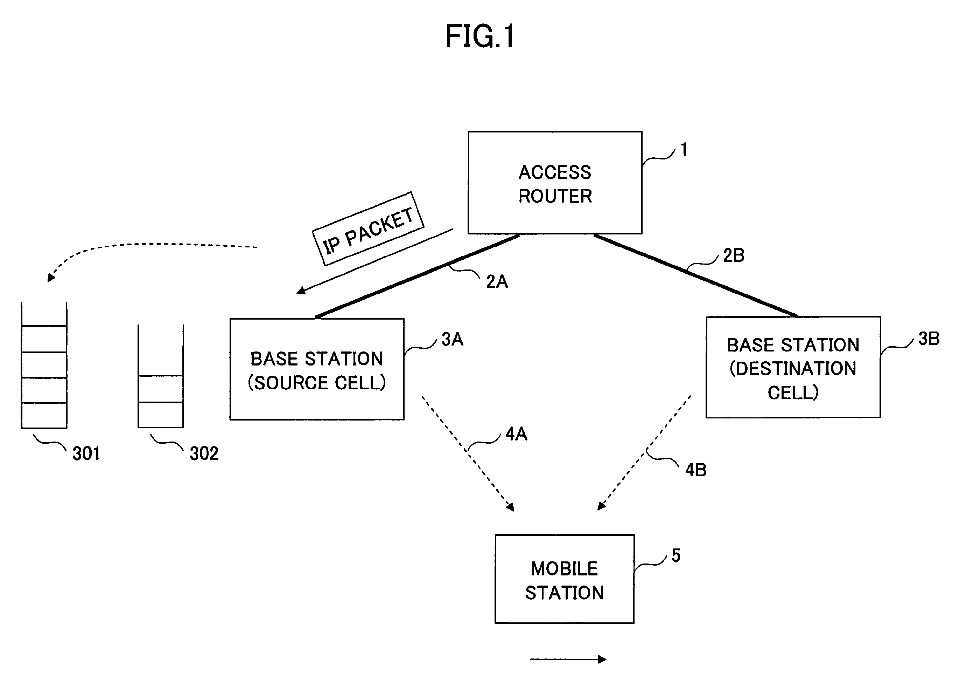

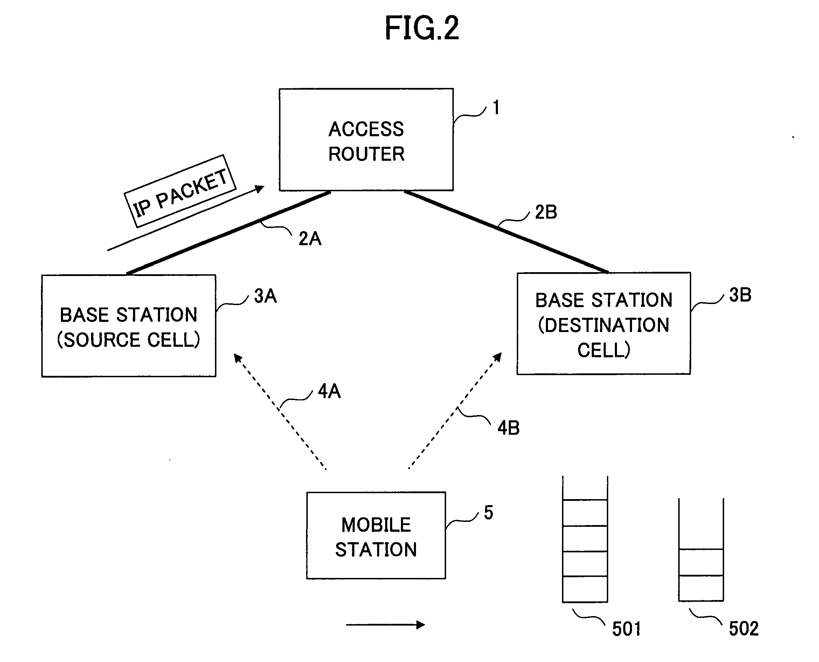

FIGS 1 and 2 show exemplary configurations of a mobile communication network according to one embodiment of the present invention. FIG. 1 shows the configuration in association with downlinks while FIG. 2 shows the configuration in association with uplinks.

In FIGS. 1 and 2, an access router 1 is connected to base stations 3A and 3B via wired links 2A and 2B, and the base stations 3A and 3B are in turn wirelessly connected to a mobile station 5 via radio links 4A and 4B. In these illustrations, it is assumed that the mobile station 5 is moving from the cell area of the base station 3A (source cell) to the cell area of the base station 3B (destination cell).

The access router 1 is capable of forwarding an IP packet received from another node (not shown) to the base station 3A as well as forwarding an IP packet received from the base station 3A to another node (not shown).

Also, the base station 3A includes a scheduling buffer 301 for buffering waiting radio packets whose transmissions have not been assigned after mapping (subdivision or concatenation) of IP packets to the radio packets and a retransmission buffer 302 for buffering radio packets that have been transmitted but have not been properly received at the mobile station 5.

Similarly, the mobile station 5 includes a scheduling buffer 501 for buffering radio packets whose transmissions have not been assigned yet and that are waiting to be scheduled after mapping of IP packets to the radio packets and a retransmission buffer 502 for buffering radio packets that have been transmitted but have not been properly received at the mobile station 5.

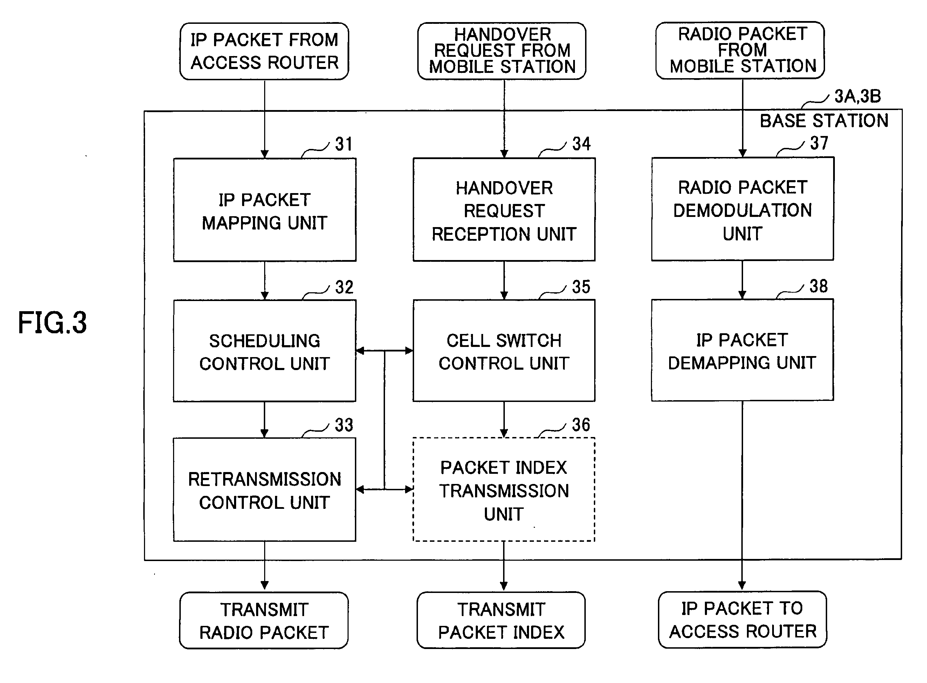

FIG. 3 shows an exemplary arrangement of the base stations 3A and 3B. In FIG. 3, the base stations 3A and 3B each includes an IP packet mapping unit 31 for mapping IP packets from the access router 1, a scheduling control unit 32 for scheduling radio packets and a retransmission control unit 33 for retransmitting radio packets through Hybrid ARQ (Automatic Repeat Request). The scheduling buffer 301 is mounted in the scheduling control unit 32, and the retransmission buffer 302 is mounted in the retransmission control unit 33.

In addition, the base stations 3A and 3B each includes a handover request reception unit 34 for receiving handover requests from the mobile station 5, a cell switch control unit 35 for switching cells (base stations) in response to the handover requests and a packet index transmission unit 36 for transmitting the indices of packets completely transmitted in source cells from the source cells to destination cells via wired transmissions.

Furthermore, the base stations 3A and 3B each includes a radio packet demodulation unit 37 for demodulating radio packets from the mobile station 5 and an IP packet demapping unit 38 for generating IP packets from the demodulated radio packets.

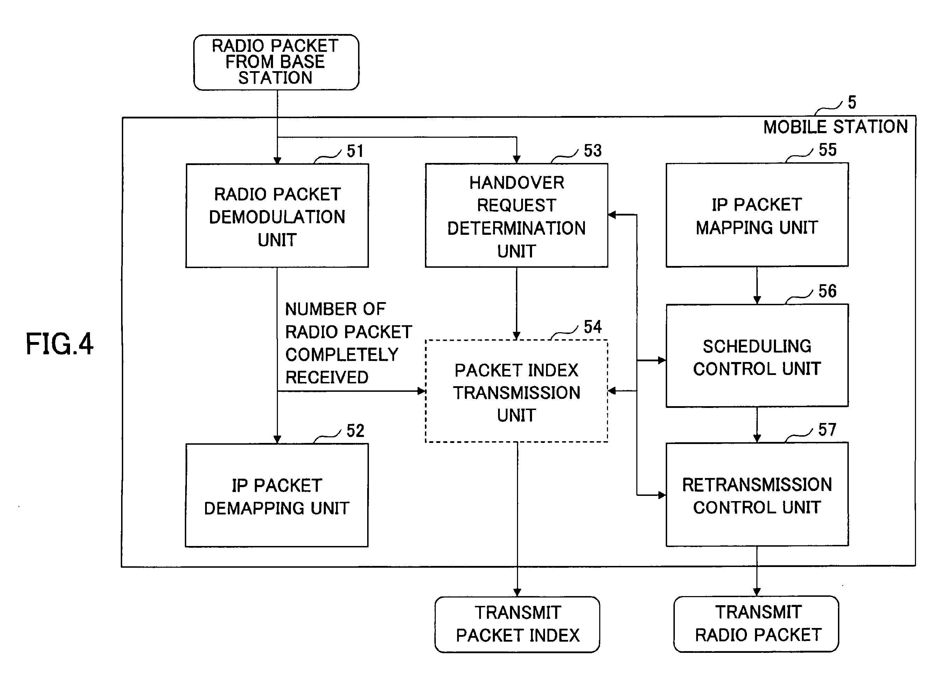

FIG. 4 shows an exemplary arrangement of the mobile station 5. In FIG. 4, the mobile station 5 includes a radio packet demodulation unit 51 for demodulating radio packets from the base stations 3A and 3B and an IP packet demapping unit 52 for generating IP packets from the demodulated radio packets.

In addition, the mobile station 5 includes a handover request determination unit 53 for determining whether handover should be carried out depending on the reception status of radio signals from the base stations 3A and 3B and issuing handover requests and a packet index transmission unit 54 for transmitting the indices of packets completely transmitted in source cells from the mobile station 5 to destination cells via radio transmissions. Note that either the packet index transmission unit 36 in the base stations 3A and 3B or the packet index transmission unit 54 in the mobile station 5 must be provided but both the packet index transmission units 36 and 54 may be provided.

Furthermore, the mobile station 5 includes an IP packet mapping unit 55 for mapping IP packets generated in the mobile station 5, a scheduling control unit 56 for scheduling radio packets and a retransmission control unit 57 for retransmitting radio packets through Hybrid ARQ. The scheduling buffer 501 is provided within the scheduling control unit 56, and the retransmission buffer 502 is provided within the retransmission control unit 57.

Operations of each embodiment of the present invention will be described hereinafter.

### [First Embodiment]

In the first embodiment, radio packets presently transmitted and radio packets waiting to be scheduled are discarded, and simultaneously with handover requests, the cell switch is carried out.

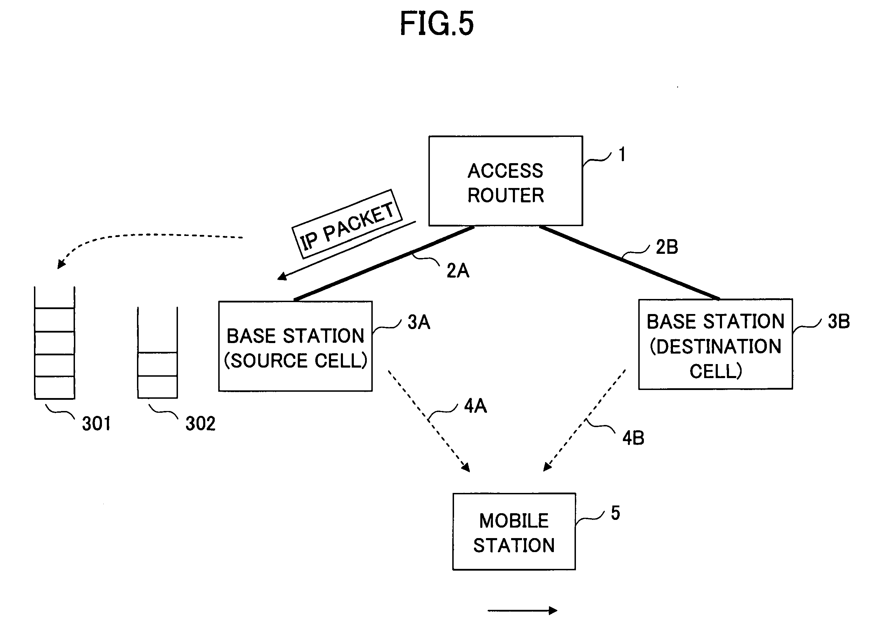

FIG. 5 shows an exemplary operation of handover control according to the first embodiment, and operations in downlinks are illustrated. In FIG. 5, it is assumed that the mobile station 5 is moving from the cell area of the base station 3A (source cell) to the cell area of the base station 3B (destination cell).

When the mobile station 5 determines that handover is required depending on the reception status of radio signals from the base stations 3A and 3B, the mobile station 5 issues handover requests to the base stations 3A and 3B. At this time point, the scheduling buffer 301 in the base station 3A has radio packets whose transmissions have not been assigned yet and that are waiting to be scheduled, and the retransmission buffer 302 in the base station 3A has radio packets that have not been completely received.

Upon receipt of the handover request from the mobile station 5, the base station 3A discards all the radio packets buffered in the scheduling buffer 301 and the retransmission buffer 302 and switches between the cells. Then, transmission of packets is retried in the handover destination base station 3B. A radio packet and an IP packet may be used as the unit of packets for retried transmission.

Also, transmission of packets to the base station 3B (destination cell) may be carried out, for example, by transmitting, when the mobile station 5 arrives at an approximately middle point between the base stations 3A and 3B, the same packets from the access router 1 to the base stations 3A and 3B in accordance with a so-called bicast scheme or by transmitting from the base station 3A to the base station 3B packets that have not been transmitted yet.

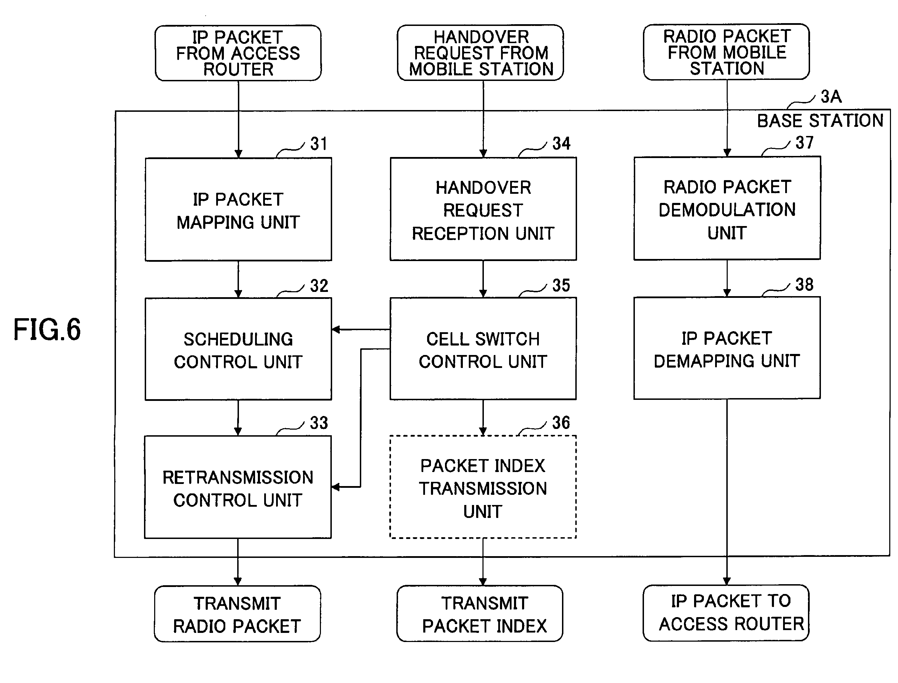

FIG. 6 shows exemplary signal flow among units within the base station 3A in handover control. When, the handover request reception unit 34 receives a handover request from the mobile station 5, the cell switch control unit 35 requests the scheduling control unit 32 and the retransmission control unit 33 to discard packets from the respective buffers and at the same time, switches between the cells.

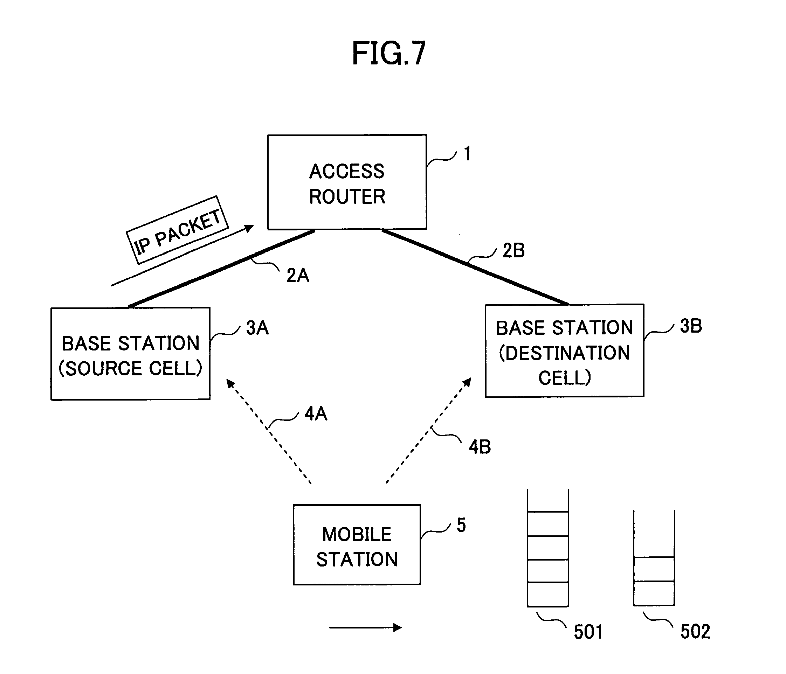

FIG. 7 shows an exemplary operation in uplinks according to the first embodiment. In FIG. 7, when the mobile station 5 is to issue a handover request, the scheduling buffer 501 in the mobile station 5 has radio packets whose transmissions have not been assigned yet and that are waiting to be scheduled, and the retransmission buffer 502 in the mobile station 5 has radio packets that have not been completely received.

Simultaneously with issuing of the handover request, the mobile station 5 retransmits all packets presently transmitted to the source cell, that is, all radio packets buffered in the scheduling buffer 501 and the retransmission buffer 502, to the destination cell. The packets may be retransmitted in the units of radio packets or IP packets.

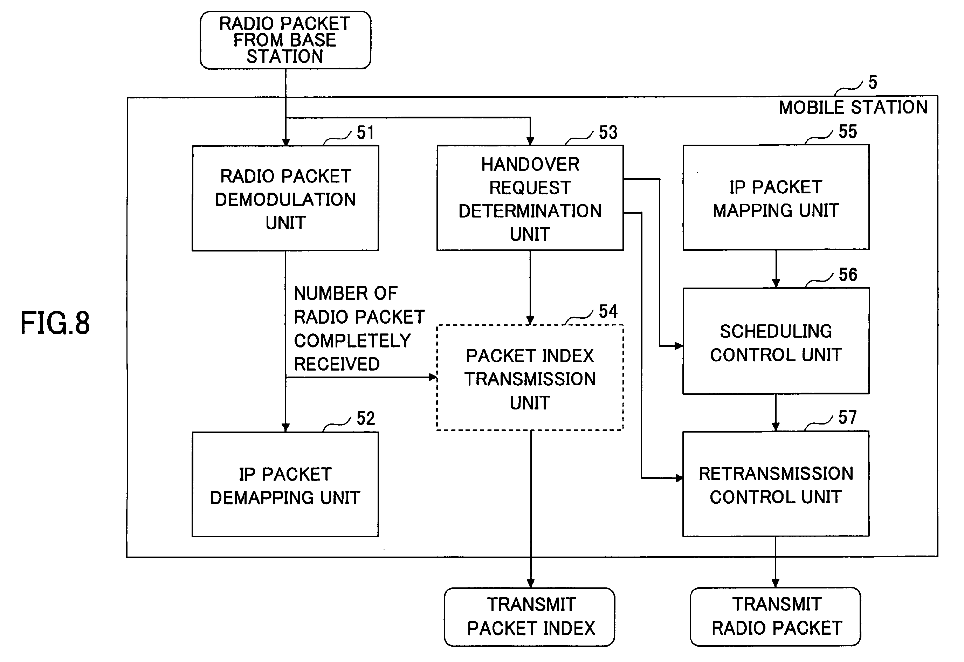

FIG. 8 shows exemplary signal flow among units within the mobile station 5 in handover control. Simultaneously with issuing the handover request, the handover request determination unit 53 controls the scheduling control unit 56 and the retransmission control unit 57 to retransmit the waiting radio packets buffered in the scheduling buffer 501 and the incompletely received radio packets buffered in the retransmission buffer 502 to the destination cell.

According to the first embodiment, the cell is switched simultaneously with the handover request. As a result, the first embodiment has advantages of reduction of control delay in handover and improvement of throughput characteristics because packets can be transmitted from the destination cell having better reception quality. On the other hand, the first embodiment has disadvantages that if packets are being retransmitted, resources involved in the retransmission are unnecessarily consumed.

### [Second Embodiment]

In the second embodiment, cell switch is carried out after completion of transmission of radio packets presently retransmitted.

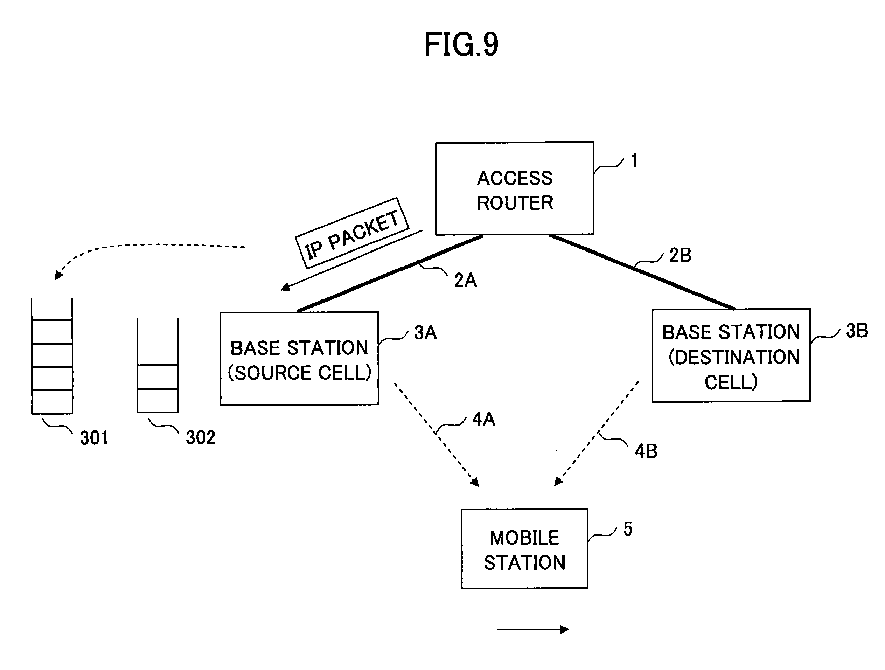

FIG. 9 shows an exemplary operation of handover control according to the second embodiment, and the operation is associated with downlinks. In FIG. 9, it is assumed that the mobile station 5 is moving from the cell area of the base station 3A (source cell) to the cell area of the base station 3B (destination cell).

When the mobile station 5 determines that the handover is necessary depending on the reception status of radio signals from the base stations 3A and 3B, the mobile station 5 issues handover requests to the base stations 3A and 3B. At this time point, the scheduling buffer 301 of the base station 3A has radio packets whose transmissions have not been assigned yet and that are waiting to be scheduled, and the retransmission buffer 302 of the base station 3A has radio packets that have not been completely received.

Upon receiving the handover request from the mobile station 5, the base station 3A discards the radio packets buffered in the scheduling buffer 301 as well as waits for completion of the transmission of the radio packets that are presently retransmitted and are buffered in the retransmission buffer 302 and then switches between the cells. Then, the handover destination base station 3B retransmits packets that have not been transmitted. This retransmission may be carried out in the units of radio packets or IP packets.

Also, the transmission of packets to the base station 3B (destination cell) may be carried out, for example, by transmitting, when the mobile station 5 arrives at an approximately middle point between the base stations 3A and 3B, the same packets from the access router 1 to the base stations 3A and 3B in accordance with a so-called bicast scheme or by forwarding from the base station 3A to the base station 3B packets that have not been transmitted.

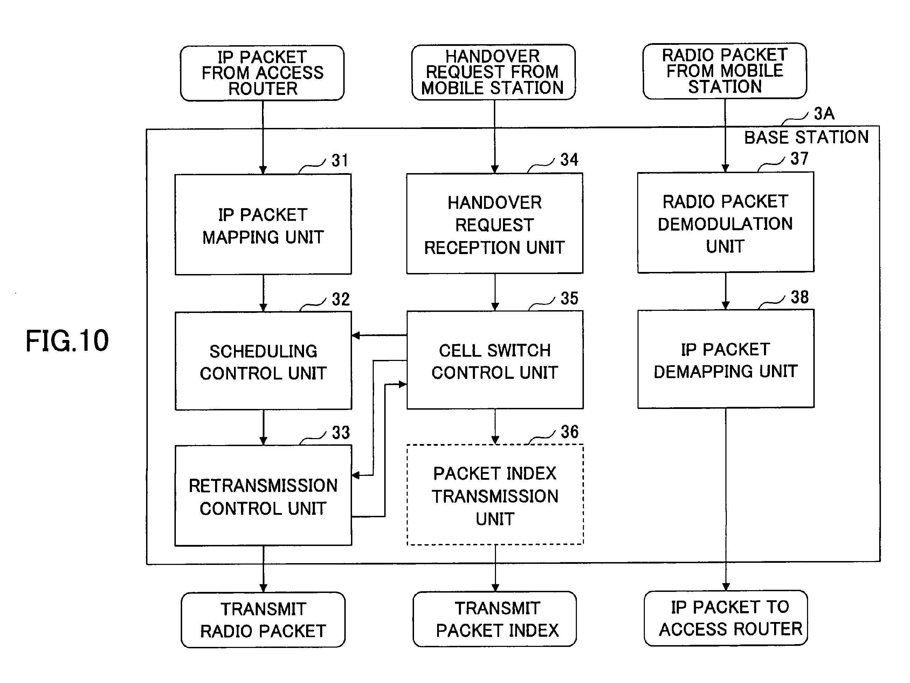

FIG. 10 shows exemplary signal flow among units within the base station 3A in handover control. When the handover request reception unit 34 receives a handover request from the mobile station 5, the cell switch control unit 35 requests the scheduling control unit 32 to discard packets from the buffer as well as monitors the retransmission control unit 33 and waits for completion of transmission of packets presently retransmitted. Then, the cell switch control unit 35 switches between the cells simultaneously with the completion of transmission of the packets presently retransmitted.

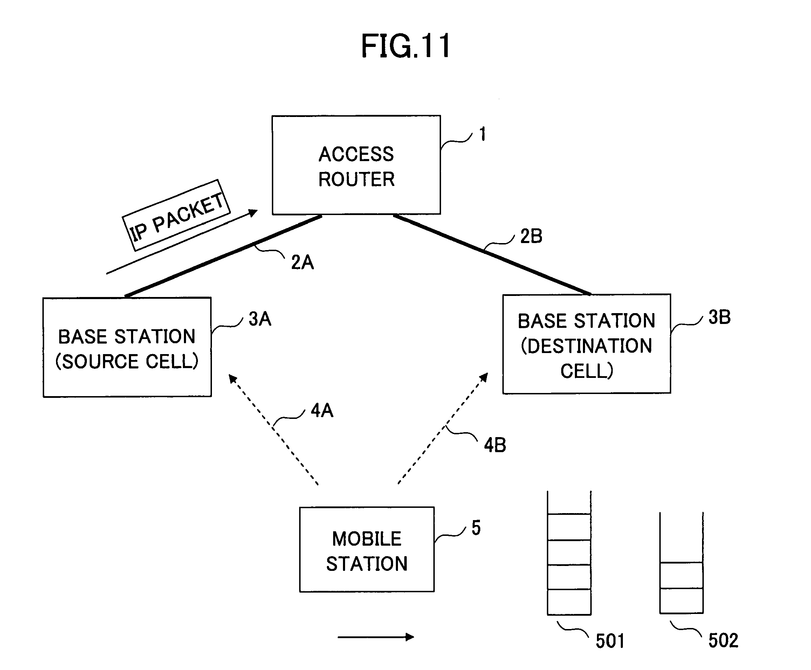

FIG. 11 shows an exemplary operation in uplinks according to the second embodiment. In FIG. 11, when the mobile station 5 is to issue a handover request, the scheduling buffer 501 in the mobile station 5 has radio packets whose transmissions have not been assigned yet and that are waiting to be scheduled, and the retransmission buffer 502 in the mobile station 5 has radio packets that have not been completely received.

If the mobile station 5 is to issue the handover request, transmission of the radio packets buffered in the scheduling buffer 501 to the source cell is halted. In addition, after the transmission of the radio packets buffered in the retransmission buffer 502 is completed, the handover request is issued and untransmitted packets are transmitted to the destination cell. Then transmission may be carried out in the units of radio packets or IP packets.

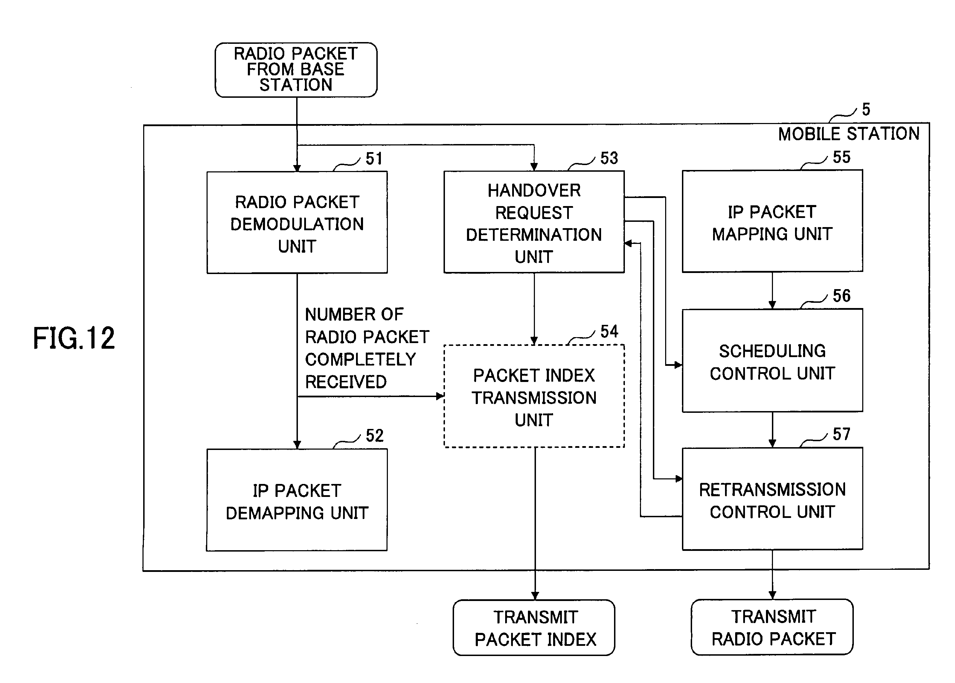

FIG. 12 shows exemplary signal flow among units within the mobile station 5 in handover control. When the handover request determination unit 53 attempts to issue a handover request, the handover request determination unit 53 requests the scheduling control unit 56 to halt transmission of waiting radio packets to the source cell as well as monitors the retransmission control unit 57 and waits for completion of transmission of packets presently retransmitted. Then, the handover request determination unit 53 issues the handover request at the same time of the completion of transmission of the packets presently retransmitted and retransmits untransmitted packets to the destination cell.

The second embodiment has advantages that resources used to transmit radio packets presently retransmitted can be efficiently utilized and thus some effect of packet combination in Hybrid ARQ can be expected. On the other hand, the second embodiment has disadvantages that since the radio packets presently retransmitted are transmitted in the source cell having lower reception quality, time delay from handover requests to cell switching may increase due to retransmission caused by transmission errors.

### [Third Embodiment]

In the third embodiment, after completion of transmission of radio packets presently retransmitted and radio packets waiting to be scheduled, the cell switch is carried out.

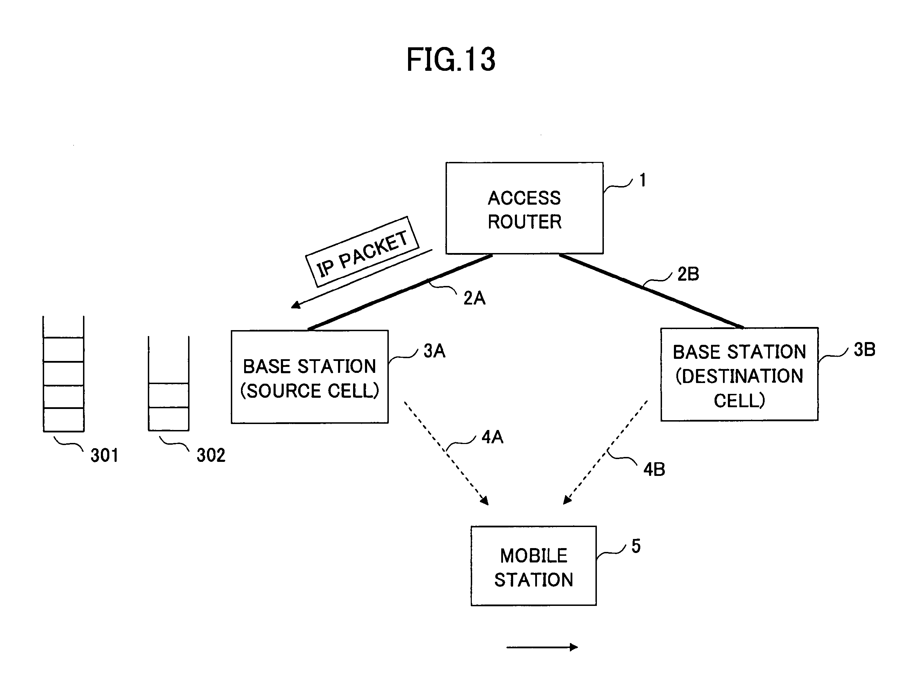

FIG. 13 shows an exemplary operation of handover control according to the third embodiment, and the operation is associated with downlinks. In FIG. 13, it is assumed that the mobile station 5 is moving from the cell area of the base station 3A (source cell) and the cell area of the base station 3B (destination cell).

When the mobile station 5 determines that handover is necessary depending on the reception status of radio signals from the base stations 3A and 3B, the mobile station 5 issues handover requests to the base stations 3A and 3B. At this time point, the scheduling buffer 301 in the base station 3A has radio packets whose transmissions have not been assigned yet and that are waiting to be scheduled, and the retransmission buffer 302 in the base station 3A has radio packets that have not been completely received.

Upon receipt of a handover request from the mobile station 5, the base station 3A waits for completion of transmission the radio packets buffered in the scheduling buffer 301 and the retransmission buffer 302 and switches between the cells.

Also, transmission of packets to the base station 3B (destination cell) may be carried out, for example, by transmitting, when the mobile station 5 arrives at an approximately middle point between the base stations 3A and 3B, the same packets from the access router 1 to the base stations 3A and 3B in accordance with a so-called bicast scheme or by forwarding untransmitted packets from the base station 3A to the base station 3B.

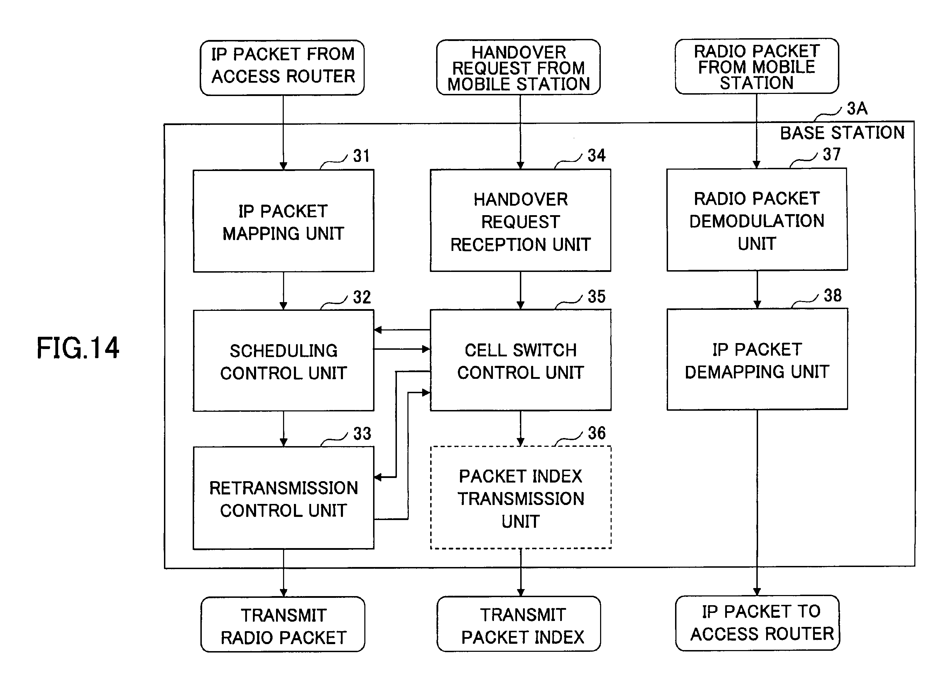

FIG. 14 shows exemplary signal flow among units within base station 3A in handover control. When the handover request reception unit 34 receives a handover request from the mobile station 5, the cell switch control unit 35 monitors the scheduling control unit 32 and the retransmission control unit 33 and waits for completion of transmission of radio packets presently retransmitted and radio packets waiting to be scheduled. Then, once the packets have been completely transmitted, the cell switch control unit 35 switches between the cells.

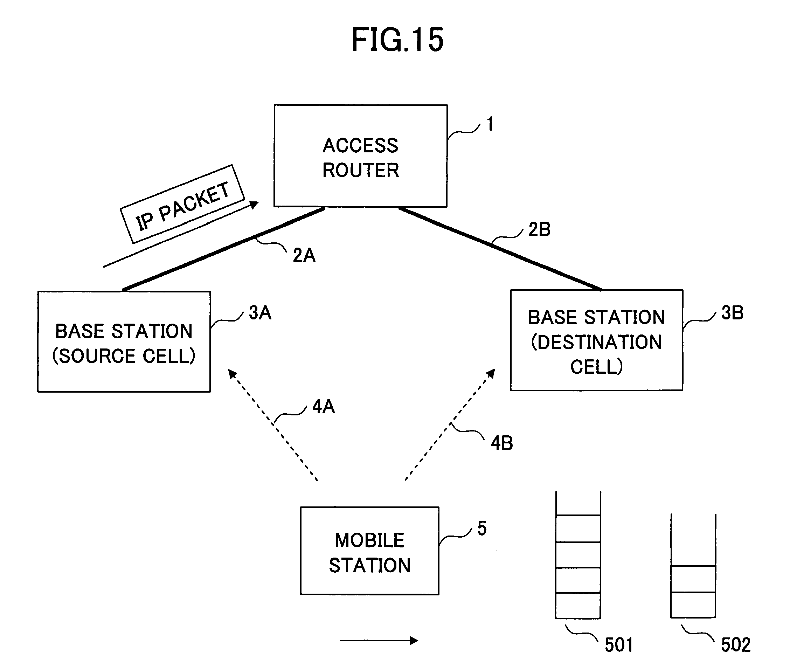

FIG. 15 shows an exemplary operation in uplinks according to the third embodiment. In FIG. 15, when the mobile station 5 is to issue a handover request, the scheduling buffer 501 in the mobile station 5 has radio packets whose transmissions have not been assigned yet and that are waiting to be scheduled, and the retransmission buffer 502 in the mobile station 5 has radio packets that have not been completely received.

If the mobile station 5 is to issue the handover request, the mobile station 5 issues the handover request after completion of the transmission of the radio packets buffered in the scheduling buffer 501 and the retransmission buffer 502.

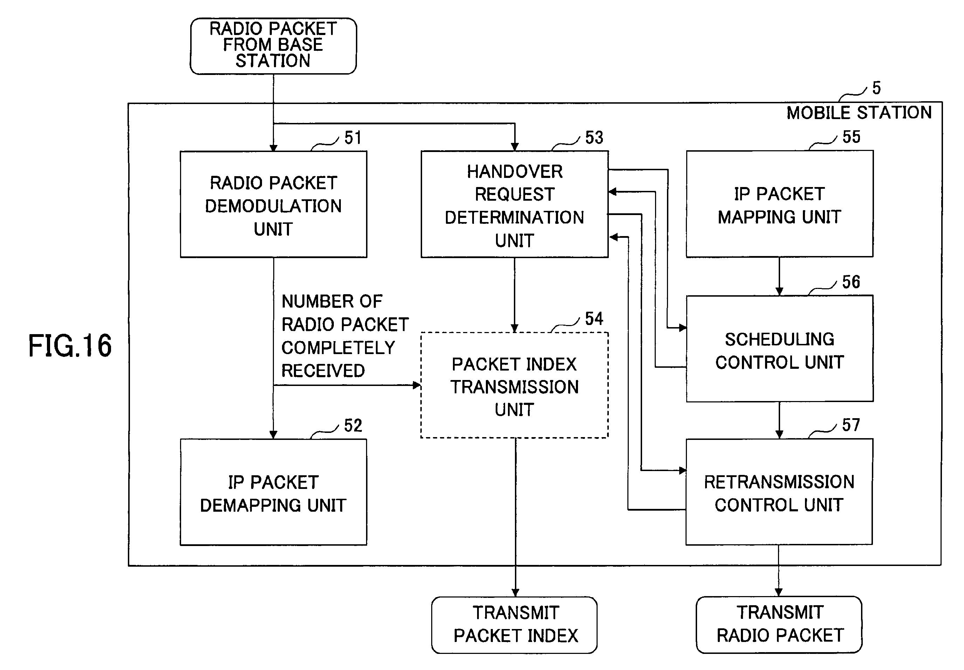

FIG. 16 shows exemplary signal flow among units within the mobile station 5 in handover control. If the handover request determination unit 53 attempts to issue a handover request, the handover request determination unit 53 monitors the scheduling control unit 56 and the retransmission control unit 57 and waits for completion of transmission of packets. Then, once the packets have been completely transmitted, the handover request determination unit 53 issues the handover request.

The third embodiment has advantages that since the cell switch is carried out after completion of all transmissions of radio packets presently retransmitted and radio packets waiting to be scheduled, management of the buffers can be made easier. On the other hand, the third embodiment has disadvantages that since all the radio packets that are presently retransmitted and are waiting to be scheduled are transmitted in the source cell having degraded reception quality, it takes a longer time to completely transmit the radio packets and time delay from the handover request to the cell switch may increase.

### [Fourth Embodiment]

The fourth embodiment relates to some notification method of indices of packets completely transmitted in the source cell where the indices are transmitted from the source cell to the destination cell via wired links.

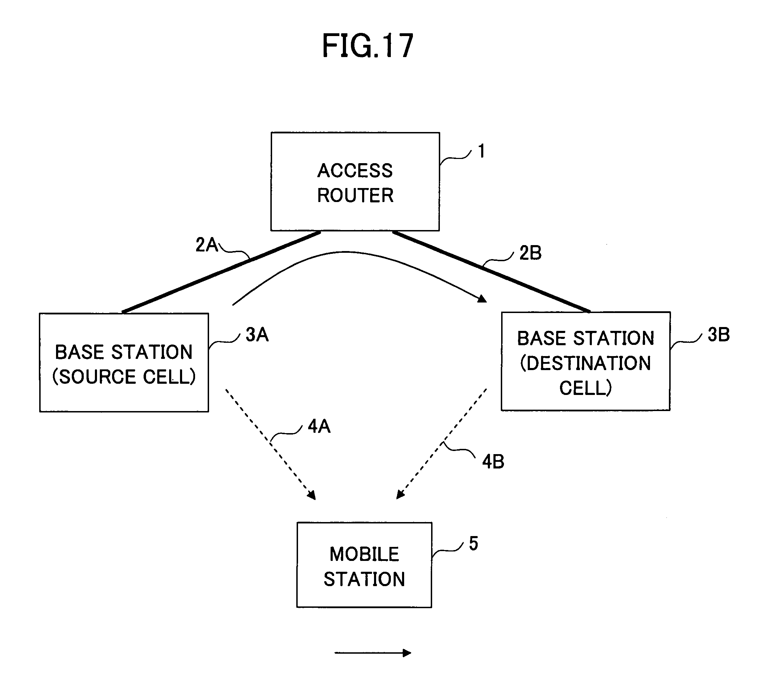

FIG. 17 shows an exemplary operation of transmitting the indices to the destination cell according to the fourth embodiment. In FIG. 17, assuming the mobile station 5 is moving from the cell area of the base station 3A (source cell) to the cell area of the base station 3B (destination cell), the indices are transmitted from the base station 3A having the packet numbers of packets that the source cell has completely transmitted to the base station 3B via the wired transmission path 2A, the access router 1 and the wired transmission path 2B. The transmitted indices may be the packet numbers of radio packets or the packet numbers of IP packets.

When the mobile station 5 arrives at an approximately middle point between the base stations 3A and 3B, the access router 1 supplies the same IP packets to the base stations 3A and 3B in accordance with a so-called bicast scheme. Thus, the base station 3B can recognize completely transmitted packets with reference to the transmitted indices.

The fourth embodiment has advantages that the transmission via the wired links can reduce transmission error delay. On the other hand, the fourth embodiment has a disadvantage that since it cannot be accurately determined in the source cell whether the mobile station 5 has properly received packets, there is a possibility of duplication occurring.

### [Fifth Embodiment]

In the fifth embodiment, the indices are transmitted the mobile station 5 to the destination cell in the air.

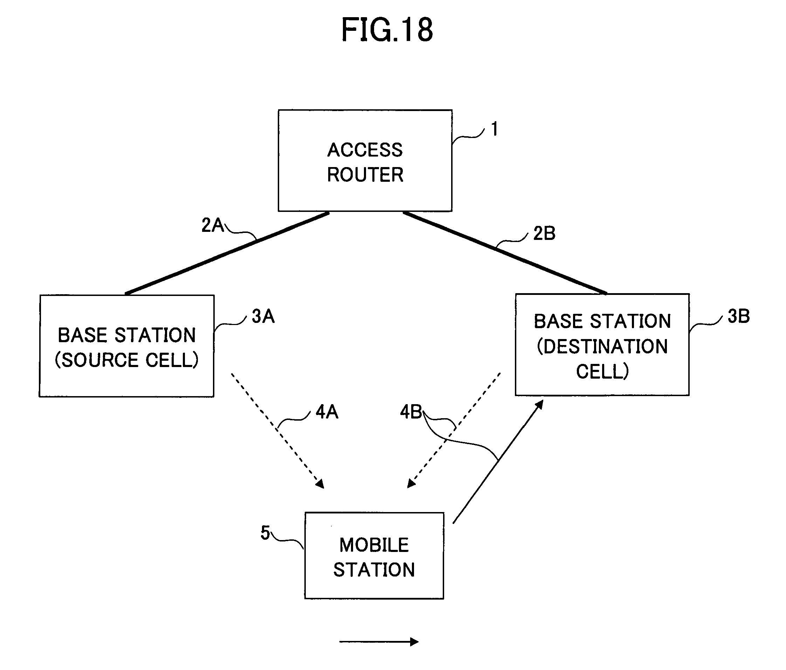

FIG. 18 shows an exemplary operation of transmitting the indices to the destination cell according to the fifth embodiment. In FIG. 18, assuming that the mobile station 5 is moving from the cell area of the base station 3A (source cell) to the cell area of the base station 3B (destination cell), the indices are transmitted from the mobile station 5 having the packet numbers of packets that the source cell has completely transmitted to the base station 3B via a radio transmission path 4B. The transmitted indices may be the packet numbers of radio packets or the packet numbers of IP packets.

When the mobile station 5 arrives at an approximately middle point between the base stations 3A and 3B, the access router 1 supplies the same IP packets to the base stations 3A and 3B in accordance with a so-called bicast scheme. Thus, the base station 3B can recognize the completely transmitted packets with reference to the transmitted indices.

The fifth embodiment has advantages that the correct packet numbers of packets completely received by the mobile station 5 can be transmitted. On the other hand, the fifth embodiment has a disadvantage that since the indices are transmitted in the air, delay due to transmission errors may increase.

The combination of the index notification via wired links as illustrated in FIG. 17 and the index notification via radio links may be used together, and the indices considered to be more appropriate may be applied for improved accuracy.

The preferred embodiments of the present invention have been described. Although the present invention has been described in the specific embodiments, various modification and variations can be made to the embodiments within the spirit and scope of the present invention as defined in the attached claims, and the present invention is not limited to the specific embodiments and the accompanying drawings.

This international patent application is based on Japanese Priority Application No. 2006-9294 filed on January 17, 2006, the entire contents of which are hereby incorporated by reference.

## Claims

1. A handover control method in a mobile communication network wherein an IP packet is exchanged between an access router and a base station, comprising the steps of:
receiving a handover request from a mobile station;
discarding a packet presently retransmitted and a packet waiting to be scheduled; and
switching between cells.

2. A handover control method in a mobile communication network wherein an IP packet is exchanged between an access router and a base station, comprising the steps of:
receiving a handover request from a mobile station;
discarding a packet waiting to be scheduled;
waiting for completion of transmission of a packet presently retransmitted; and
switching between cells.

3. A handover control method in a mobile communication network wherein an IP packet is exchanged between an access router and a base station, comprising the steps of:
receiving a handover request from a mobile station;
waiting for completion of transmission of a packet presently retransmitted and a packet waiting to be scheduled; and
switching between cells.

4. The handover control method as claimed in any of claims 1 to 3, further comprising the step of:
transmitting an index of a packet completely transmitted in a source cell from the source cell to a destination cell in wired transmission.

5. The handover control method as claimed in any of claims 1 to 3, further comprising the step of:
transmitting an index of a packet completely transmitted in a source cell from a mobile station to a destination cell in radio transmission.

6. A base station apparatus in a mobile communication network wherein an IP packet is exchanged between an access router and a base station, comprising:
a reception unit receiving a handover request from a mobile station;
a cell switch unit switching between cells, the cell switch unit discarding a packet presently retransmitted and a packet waiting to be scheduled, or discarding a packet waiting to be scheduled and waiting for completion of transmission of a packet presently retransmitted, or waiting for completion of transmission of a packet presently retransmitted and a packet waiting to be scheduled.

7. The base station apparatus as claimed in claim 6, further comprising:
a notification unit transmitting an index of a packet completely transmitted in a source cell from the source cell to a destination cell via wired transmission.

8. A mobile station apparatus in a mobile communication network wherein an IP packet is exchanged between an access router and a base station, comprising:
a handover request unit issuing a handover request to a base station, the handover request unit discarding a packet presently retransmitted and a packet waiting to be scheduled, or discarding a packet waiting to be scheduled and waiting for completion of transmission of a packet presently retransmitted, or waiting for completion of transmission of a packet presently retransmitted and a packet waiting to be scheduled.

9. The mobile station apparatus as claimed in claim 8, further comprising:
a notification unit transmitting an index of a packet completely transmitted in a source cell from the source cell to a destination cell via radio transmission.
